# EUROPEAN PATENT APPLICATION

(11) **EP 1 950 543 A1**
(43) Date of publication of application: **30.07.2008**
(21) Application number: 06811491.7
(22) Date of filing: 10.10.2006
(51) Int. Cl.: G01K 7/00

(54) **ELECTRONIC THERMOMETER**

(30) Priority: 25.10.2005 JP 2005309613
(71) Applicant: Omron Healthcare Co., Ltd., Kyoto 615-0084 (JP)
(72) Inventor: TOMIOKA, Masaki, Kyoto 615-0084 (JP); SATO, Taiga, Kyoto 615-0084 (JP); NIIYAMA, Shigeto, Kyoto 615-0084 (JP)
(74) Representative: Wilhelms · Kilian & Partner Patentanwälte
(86) International application number: PCT/JP2006/320178
(87) International publication number: WO 2007/049453

(57) **Abstract**

The present invention provides an electronic thermometer which is easily installed at an appropriate position, and is excellent in the measurement accuracy.

In the electronic thermometer provided with an internally hollow casing 10 having an opening portion at the tip, a temperature sensor 21 connected by lead wire 22 drawn out from the inside of the casing 10 to the outside of the casing through the opening portion, and a cap 30 closing the openingportion, there is provided a positioning unit positioning the temperature sensor 21 at the tip of the casing 10.

## Description

### Technical Field

The present invention relates to an electronic thermometer with a temperature sensor.

### Background Art

Generally, the electronic thermometer is provided with an internally hollow casing with an opening portion at the tip, and a cap consisting of a material with a high thermal conductivity, wherein the cap closes the opening portion of the casing. Then, a temperature sensor connected by lead wire drawn out from the inside to the outside of the casing is applied against the inner wall surface of the cap. Using the electronic thermometer with the configuration, body temperature can be measured by pressing a part of the cap against the armpit for a certain time.

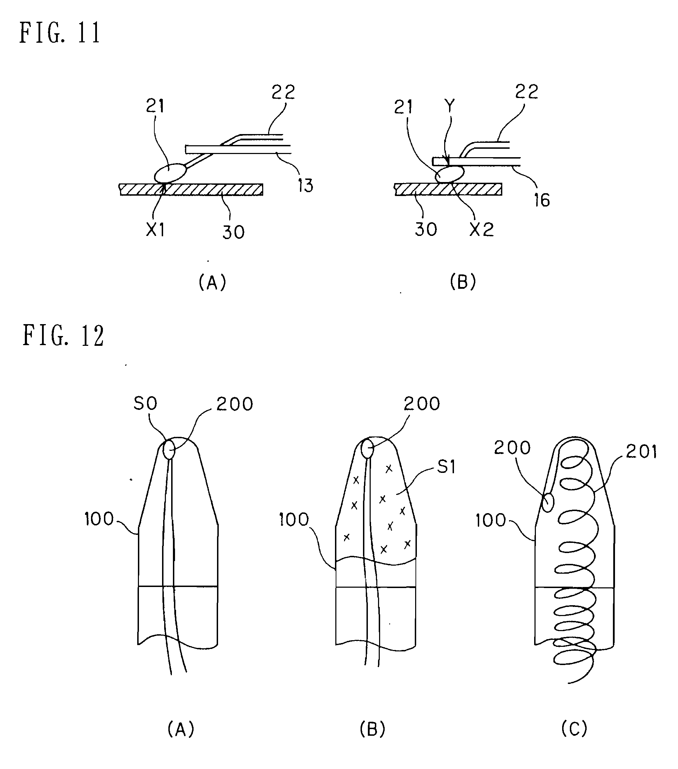

In such an electronic thermometer, the temperature sensor is required to be applied against an appropriate position on the inner wall surface of the cap in order to improve the measurement accuracy. An typical example of a method for installing the temperature sensor will be explained, referring to FIG. 12A to FIG. 12C. FIG. 12A to FIG. 12C are a schematic cross sectional view of an installation structure of a temperature sensor according to a conventional example.

In the example shown in FIG. 12A, a part of a temperature sensor 200 is bonded to the inner wall surface of a cap 100 by using adhesive S0. In this case, the cap 100 is required to be installed onto the casing after bonding the temperature sensor 200 to the inner wall surface of the cap 100 in order to bond the temperature sensor 200 at an appropriate position. Thereby, it is required, for example, to pay attention so as not to give some adverse effects on a connection portion between the lead wire to draw out the temperature sensor 200 and an electronic substrate provided in the inside of the casing, that is, there is caused a problem such as complex work processes, and high cost.

In an example shown in FIG. 12B, a temperature sensor 200 is applied against the inner wall surface of a cap 100 by filling adhesive Sl at the tip portion in the inside of the cap 100 to fix a temperature sensor 200. In this case, there is caused a problem that it is difficult to fix the temperature sensor 200 at a desired position and a larger amount of the adhesive is necessary. As there is caused larger heat capacity too, there is caused another problem that measurement time required for body-temperature measurement becomes longer.

In an example shown in FIG. 12C, a temperature sensor 200 is elastically applied against the inner wall surface of a cap 100 by making lead wire 201 like a spiral, and by letting the wire 201 trail in the inside of the cap 100. In this case, there is caused another problem that a measurement error easily occurs because a contact state between the temperature sensor 200 and the inner wall surface of the cap 100 is easily becomes unstable.

As described, there are caused various kinds of problems in any of the methods, and there has been still remained problems to be solved for a method for installing a temperature sensor. Especially, a flat-shaped cap has been known for easier inserting into the armpit in recent years. But, in order to improve the measurement accuracy in the case, it is required to fix the temperature sensor at a predetermined position (for example, in the vicinity of the center) so as not to cause variations in installation positions of the temperature sensor between commodities. Moreover, as the tip of the cap comparatively easily receive an impact, there is a fear, for example, that a temperature sensor is removed from the inner wall surface of the cap by the impact when the temperature sensor is fixed in the vicinity of the tip of the cap. Thereby, it is desirable to fix a temperature sensor at a position away from the tip of the cap. However, in the various kinds of methods, it has been difficult to fix a temperature sensor at a predetermined position with a high accuracy, and especially, it has been very difficult to fix a temperature sensor at a position away from the tip of the cap with a high accuracy.

Some of related technologies have been disclosed in Patent Documents 1 to 3.
Patent Document 1: Japanese Patent Application Laid-Open No. 2000-111414
Patent Document 2: Japanese Patent Application Laid-Open No. 2004-184324
Patent Document 3: Japanese Patent Application Laid-Open No. 2005-140772

### Disclosure of the Invention

### Problem to be Solved by the Invention

The object of the present invention is to provide an electronic thermometer which is easily installed at an appropriate position, and is excellent in the measurement accuracy.

### Means for Solving Problem

The present invention has adopted the following units in order to solve the problem.

That is, an electronic thermometer according to the present invention is included:
an internally hollow casing with an opening portion at the tip;
a temperature sensor connected by lead wire drawn out from the inside of the casing to an outside of a casing portion through the opening portion; and
a cap closing the opening portion, wherein
a positioning unit positioning the temperature sensor is provided at the tip of the casing.

According to the present invention, the position of a temperature sensor to the cap can be determined only by fitting the cap into the casing because the positioning unit positioning the temperature sensor is provided at the tip of the casing. Accordingly, the temperature sensor can be easily installed at an appropriate position. Thereby, the assembly efficiency can be improved.

The positioning unit may be a lead wire holding portion holding the lead wire in a state in which the temperature sensor is pressed against the inner wall surface of the cap.

Thereby, the temperature sensor is installed at an appropriate position, and, at the same time, the measurement accuracy is improved because the lead wire is held by the lead wire holding portion, and the temperature sensor is pressed against the inner wall surface of the cap. Moreover, as a large amount of adhesives is not required according to such a holding method, the heat capacity becomes smaller to improve the response.

The temperature sensor may have a configuration in which the sensor is provided at a position at which the sensor does not contact the lead wire holding portion, and, at the same time, the temperature sensor is pressed against the inner wall surface of the cap by at least any one of the elasticity of the lead wire holding portion and that of the lead wire.

According to the configuration, heat hardly escapes from the temperature sensor to the lead wire holding portion, and temperature measurement can be performed with high accuracy and in a short time.

Moreover, the temperature sensor may be bonded to the inner wall surface of the cap by adhesive.

The contact state of the temperature sensor can be further stabilized by the configuration.

Preferably, the temperature sensor is supported by the lead wire holding portion and the inner wall surface of the cap.

According to the configuration, the contact of the temperature sensor can be stabilized without using adhesive and the like.

The lead wire holding portion may be configured to include an extending portion in which a part of the opening end edge of the opening portion is extended, and a space through which the lead wire passes is provided in the extending portion.

Here, there is provided a configuration in which the extending portion has: a protruding portion protruding in the longitudinal direction of the casing;
and a bending portion bending from the tip of the protruding portion, and the lead wire passes through a space between the opening end edge of the opening portion and the bending portion.

A groove preventing position deviation of the lead wire may be formed in the bending portion.

As position deviation of a lead wire is prevented according to the configuration, the accuracy of the installation position of the temperature sensor can be improved.

The bottom of the groove may be formed by an inclined surface which is inclined in the direction approaching the inner wall surface of the cap as approaching the tip of the protruding portion.

Thereby, an excessive load is prevented from being applied to the lead wire.

Preferably, the extending portion has:
a protruding portion protruding in the longitudinal direction of the casing; and
a through hole which is formed around the vicinity of the tip of the protruding portion, and has a size passing the lead wire, and not passing the temperature sensor, wherein
the lead wire passes through the through hole.

Preferably, the extending portion has:
a protruding portion protruding in the longitudinal direction of the casing; and
a V groove portion formed at the tip of the protruding portion, wherein
the lead wire is inserted into the V groove portion.

Preferably, the positioning unit also is the temperature sensor holding portion holding the temperature sensor itself at the tip of the casing.

The temperature sensor may be supported by the temperature sensor holding portion and the inner wall surface of the cap.

The temperature sensor may be fixed to the temperature sensor holding portion by bonding.

Here, possible combinations of the configurations can be adopted.

### Effect of the Invention

According to the present invention, a temperature sensor can be easily installed at an appropriate position, and, also, the measurement accuracy is improved as explained above.

### Brief Description of Drawings

FIG. 1 is a perspective view of a casing of an electronic thermometer according to an Example 1 of the present invention;
FIG. 2 is a perspective view showing the vicinity of the tip of the casing of the electronic thermometer according to the Example 1 of the present invention;
FIG. 3 is a perspective view showing a state in which a temperature sensor is drawn out in the vicinity of the tip of the casing of the electronic thermometer according to the Example 1 of the present invention;
FIG. 4 is a perspective view showing a state in which lead wire is held in the vicinity of the tip of the electronic thermometer according to the Example 1 of the present invention;
FIG. 5 is a perspective view showing a state in which a cap is installed to the casing of the electronic thermometer according to the Example 1 of the present invention;
FIG. 6 is a schematic cross sectional view showing a state before installation of the casing and the cap in the electronic thermometer according to the Example 1 of the present invention;
FIG. 7 is a schematic cross sectional view showing a state in which the cap is installed to the casing in the electronic thermometer according to the Example 1 of the present invention;
FIG. 8 is a perspective view of the electronic thermometer according to the Example 1 of the present invention;
FIG. 9 is a perspective view of a lead wire holding portion according to an Example 2 of the present invention;
FIG. 10 is a perspective view of a lead wire holding portion according to an Example 3 of the present invention;
FIG. 11A and FIG. 11B are schematic cross sectional views showing a state in which a temperature sensor is fixed; and
FIG. 12A to FIG. 12C are schematic cross sectional views showing an installed structure of a temperature sensor according to a conventional example.

### Best Modes of Carrying Out the Invention

Hereafter, referring to drawings, best modes of carrying out the invention will be illustratively explained in detail, based on examples. However, the sizes, the materials, the shapes, the relative arrangement and the like of components, which is described in the Examples, do not limit the range of the present invention unless there is no specific description.

### (Example 1)

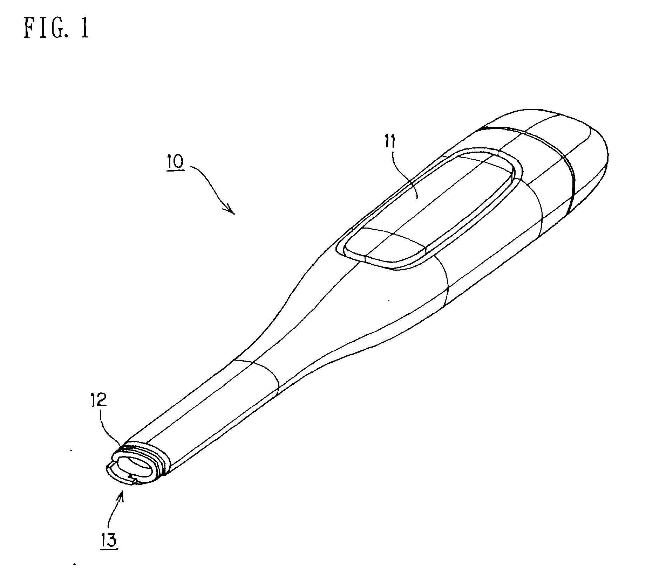

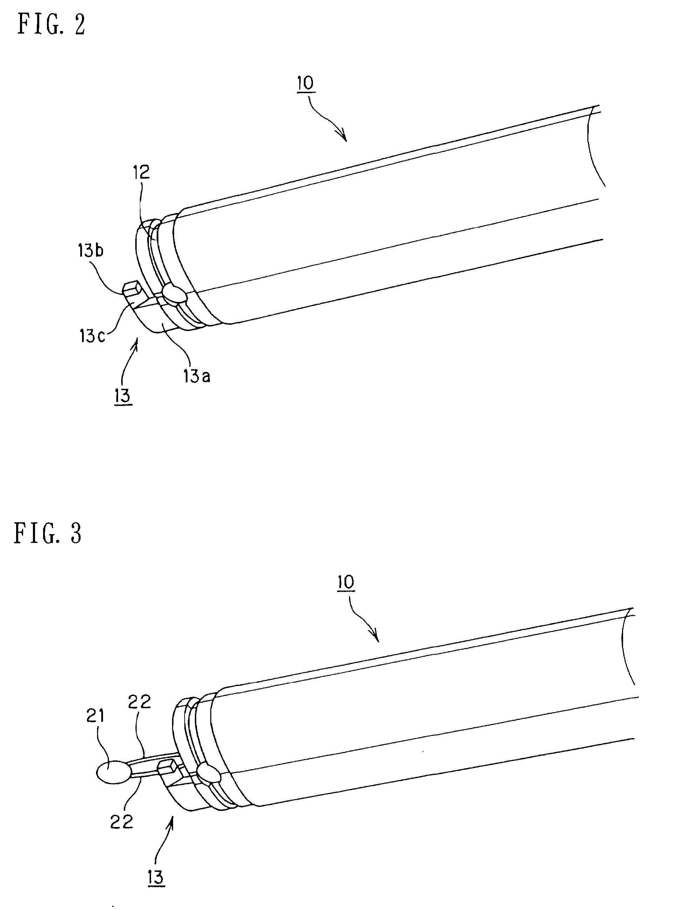

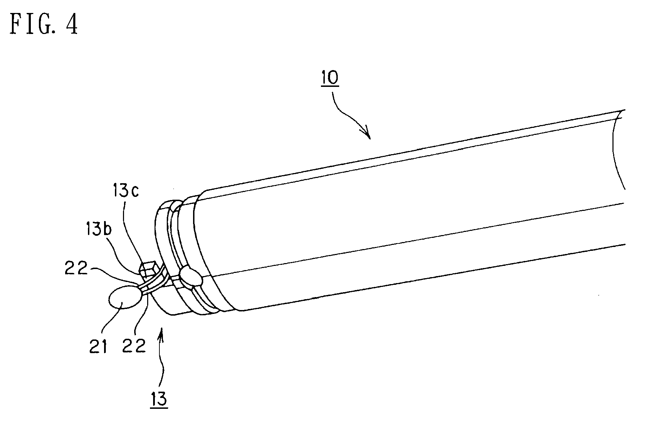

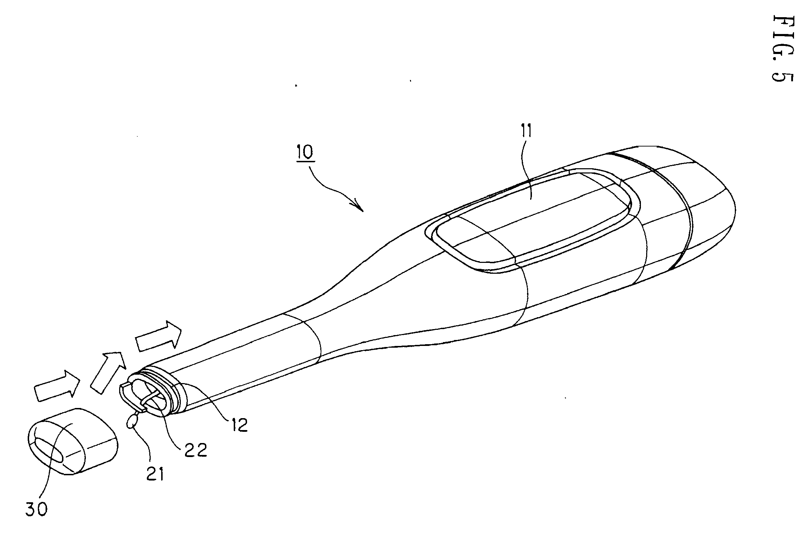

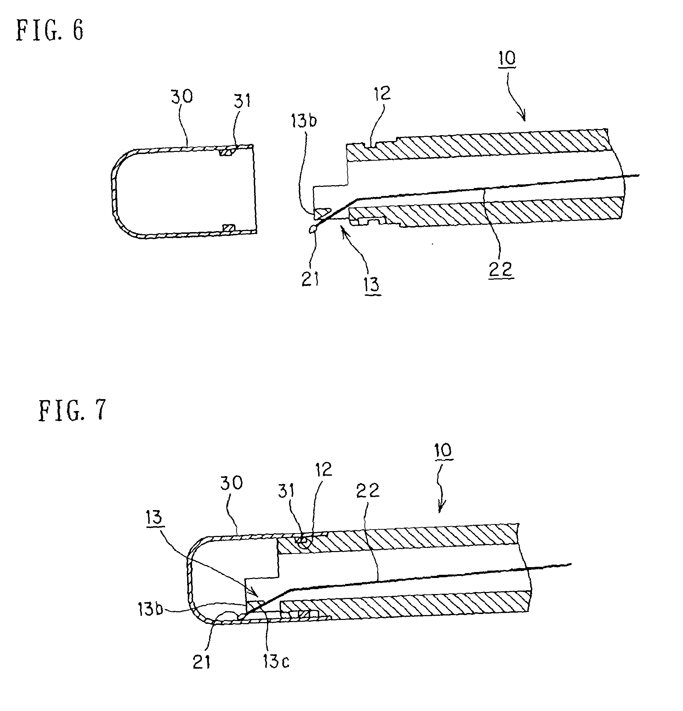

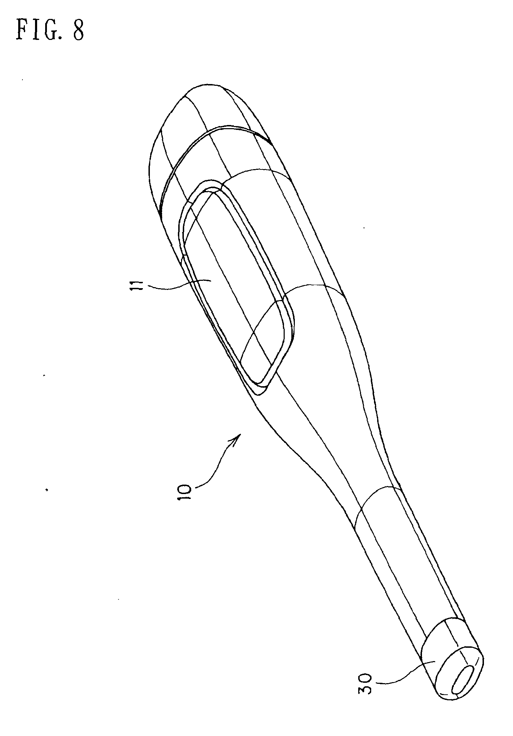

An electronic thermometer according to an Example 1 of the present invention will be explained, referring to FIG. 1 to FIG. 8. FIG. 1 is a perspective view of a casing of the electronic thermometer according to the Example 1 of the present invention. FIG. 2 is a perspective view showing the vicinity of the tip of the casing of the electronic thermometer according to the Example 1 of the present invention. FIG. 3 is a perspective view showing a state in which a temperature sensor is drawn out in the vicinity of the tip of the casing of the electronic thermometer according to the Example 1 of the present invention. FIG. 4 is a perspective view showing a state in which lead wire is held in the vicinity of the tip the electronic thermometer according to the Example 1 of the present invention. FIG. 5 is a perspective view showing a state in which a cap is installed to the casing of the electronic thermometer according to the Example 1 of the present invention. FIG. 6 is a schematic cross sectional view showing a state before installation of the casing and the cap in the electronic thermometer according to the Example 1 of the present invention. FIG. 7 is a schematic cross sectional view showing a state in which the cap is installed to the casing in the electronic thermometer according to the Example 1 of the present invention. FIG. 8 is a perspective view of the electronic thermometer according to the Example 1 of the present invention.

### <Electronic Thermometer>

Especially, the configuration of the whole electronic thermometer and the like according to an Example 1 of the present invention will be explained, referring to FIG. 8. As shown in the drawing, the electronic thermometer according to the present example is provided with an internally hollow casing 10 with an opening portion at the tip, and a cap 30 closing the opening portion of the casing 10.

A display portion 11 on which a measured temperature and the like are displayed is provided on the casing 10. Moreover, there is provided in the casing 10 an electronic substrate and the like on which an electric circuit is formed, wherein a signal detected by a later-described temperature sensor (thermistor) is processed, and a temperature is displayed on the display portion 11 by the electric circuit. Here, the electronic substrate and the like are based on a known technology, and the explanation will be eliminated. The cap 30 consist of a material with a high thermal conductivity, such as SUS, and the temperature sensor is fixed on the inner wall surface, as will be described later.

Using the electronic thermometer with the configuration, a body temperature can be measured by pressing a part of the cap 30 against the armpit for a certain time.

### <Lead Wire Holding Portion>

The electronic thermometer according to the present example has a lead wire holding portion at the tip of casing 10, wherein the portion holds lead wire drawing out a temperature sensor to the outside of the casing 10. The-described lead wire holding portion will be explained, referring to, especially, FIG. 1 and FIG. 2. Here, the lead wire holding portion functions as a positioning unit positioning the temperature sensor.

The-described opening portion is provided at the tip of the casing 10 as described above, and an annular groove 12 is formed in the vicinity of the opening portion for fixing the cap 30. Then, at the tip of the casing 10, there is provided an extending portion 13 obtained by extending a part of the opening end edge . The extending portion 13 functions as a lead wire holding portion holding lead wire.

In the present example, the extending portion 13 includes: a protruding portion 13a protruding in the longitudinal direction of the casing 10; and a bending portion 13b bending from the tip of the protruding portion 13a. Then, a groove 13c is formed in the bending portion 13b in order to prevent the position deviation of a lead wire. The bottom surface of the groove 13c is configured to include an inclined surface inclined in the direction approaching the inner wall surface of the cap 30 as it approaches the tip of the protruding portion 13a.

### <Holding of Lead Wire>

A way by which lead wire is held by the lead wire holding portion will be explained, referring to, especially, FIG. 3 and FIG. 4.

As shown in FIG. 3, a temperature sensor (thermistor) 21 connected by lead wire 22 is drawn out from the inside of the casing 10 to the tip of the casing 10 to the outside of the casing 10 through the opening portion. Here, a fixed position of the temperature sensor 21 on the inner wall surface of the cap 30 is influenced by the drawing amount (a distance from the opening end edge of the opening portion of the casing 10) of the temperature sensor 21. Accordingly, it is desirable that the drawing amount is constant as much as possible. A method for making the drawing amount constant is not particularly limited, but it may be that the length of the lead wire 22 is made constant if a fixed position, at which the end portion of the lead wire 22 is fixed, on the not-shown electronic substrate is determined. Moreover, it may be that a part within a constant distance from the temperature sensor 21 on the lead wire 22 is fixed at a predetermined position in the inside of the casing 10.

Then, the lead wire 22 is held in the extending portion 13 by putting the lead wire 22 into the space between bending portion 13b in the extending portion 13 and the opening end edge along the opening edge of the tip of the casing 10. At this time, the lead wire 22 is into a state in which the wire 22 is fit into the groove 13c formed in the bending portion 13b, and a state in which the wire 22 is bent toward the outside of the outside wall surface of the casing 10. However, there is not caused a state in which the lead wire 22 is forcibly bent because the bottom surface of the groove 13c includes the inclined surface as described above. That is, the lead wire 22 can be prevented from being cut because there can be controlled shearing force which acts on the lead wire 22 in the vertical direction. Desirably, the temperature sensor 21 is more reliably prevented from getting out from the space between the bending portion 13b and the opening end edge by a configuration in which the dimension of the space is set in such a way that the temperature sensor 21 cannot pass through the space.

### <Fixing of Temperature Sensor>

Especially, a method for fixing a temperature sensor will be explained, referring to FIG. 5 to FIG. 7.

According to the present example, in a state in which the temperature sensor 21 is pressed against the inner wall surface of the cap 30 at the desired position, positioning of the sensor 21 can be performed only by fitting the cap 30 into the casing 10 after the lead wire 22 is held in the extending portion 13 as described above. Here, the temperature sensor 21 is in a state in which the sensor 21 protrudes from the outside wall surface of the casing 10 toward the outside as described above. Thereby, the temperature sensor 21 can be prevented from being damaged by a configuration in which, in order to prevent the end portion of the cap 30 from hitting the temperature sensor 21, the cap 30 is fit into the casing 10 in such a way that the cap 30 is aligned with the center of the casing 10 from a state in which the center of the cap 30 is shifted to the side of the temperature sensor 21 (see arrows in FIG. 5).

There is provided a convex portion 31 on the inner wall surface of the cap 30, and when the cap 30 is fitted into the tip of the casing 10, the convexportion 31 engages with the groove 12 provided in the vicinity of the tip of the casing 10 to fix the cap 30 at the tip of the casing 10. In a process at which the cap 30 is fitted into the tip of the casing 10, the temperature sensor 21 is positioned at a predetermined desired position after the temperature sensor 21 is slightly sled on the inner wall surface of the cap 30. Here, when external force is not applied on the temperature sensor 21 in a state in which the lead wire 22 is held in the extending portion 13, the temperature sensor 21, as described above, is put into a state in which the temperature sensor 21 protrudes from the outside wall surface of the casing 10 toward the outside. Thereby, the temperature sensor 21 is put into a state, in which the sensor 21 is pressed against the inner wall surface of the cap 30, by the elastic force of at least one of the lead wire 22 and the extending portion 13 (especially, the bending portion 13b) under a state in which the cap 30 is fitted into the tip of the casing 10. At this time, the temperature sensor 21 is at a position away from the extending portion 13, and there is inhibited heat transmission from the temperature sensor 21 to the extending portion 13.

Here, when the temperature sensor 21 cannot be fully fixed on the inner wall surface of the cap 30 only by the elastic force, it is desirable to surely fix the temperature sensor 21 by use of an adhesive. Even in the case, the temperature sensor 21 can be bonded at a desired position only by a configuration in which an adhesive is applied at, at least, one of the tip of the temperature sensor 21, or a desired position on the inner wall surface of the cap 30, and the cap 30 is fitted into the tip of the casing 10. Here, more secured fixing can be performed not only by bonding with an adhesive, but also by soldering or welding.

### <Excellent Points in the present example>

Based on an electronic thermometer according to the present example, the temperature sensor 21 can be simply installed at a desired appropriate position because the lead wire 22 is held by the extending portion 13 functioning as the lead wire holding portion and the temperature sensor 21 is pressed against the inner wall surface of the cap 30. Even when the cap 30 has a flat shape (see FIG. 5 and FIG. 8) for easier measurement, the temperature sensor 21 can be positioned at an appropriate position (a position away from the tip, and in the vicinity of the center in the width direction) . The measurement accuracy can be improved because the temperature sensor 21 is positioned at a desired and appropriate position as described above.

Moreover, the present example is excellent in operation for installation of the temperature sensor 21 because the temperature sensor 21 can be positioned only by fixing the cap 30 to the tip of the casing 10 after holding the lead wire 22 in the extending portion 13. According to the present example, different from the case of various kinds of the conventional examples, it is not required to pay attention so as not to give some adverse effect on a connection portion of lead wire, and there is no malfunction based on a large amount of adhesive to be required. Moreover, when there is not used the installation method described in the present example, it is required to adopt a configuration in which lead wire is made longer, and a cap is fitted into a casing after installing the sensor in the cap, that is, the operation for the installation is inferior to that of the present example.

Moreover, as the present example has a configuration in which the temperature sensor 21 does not contact the extending portion 13, heat hardly escapes from the temperature sensor 21 to the extending portion 13, and temperature measurement can be performed with high accuracy and in a short time.

Moreover, when the temperature sensor 21 is bonded, using an adhesive, there can be obtained further stabilized contacted state of the temperature sensor 21 with the inner wall surface of the cap 30. Thereby, the measurement error can be further inhibited.

Accordingly, the position deviation of the lead wire 22 is more certainly prevented in the present example because the lead wire 22 is held in a state in which the wire 22 is fit into the groove 13c formed in the bending portion 13b of the extending portion 13. Then, there is inhibited to be caused a state in which the lead wire 22 is forcibly bent because the bottom of the groove 13c is configured to have an inclined surface. Accordingly, the lead wire 22 can be prevented from being damaged, for example, being cut.

### (Example 2)

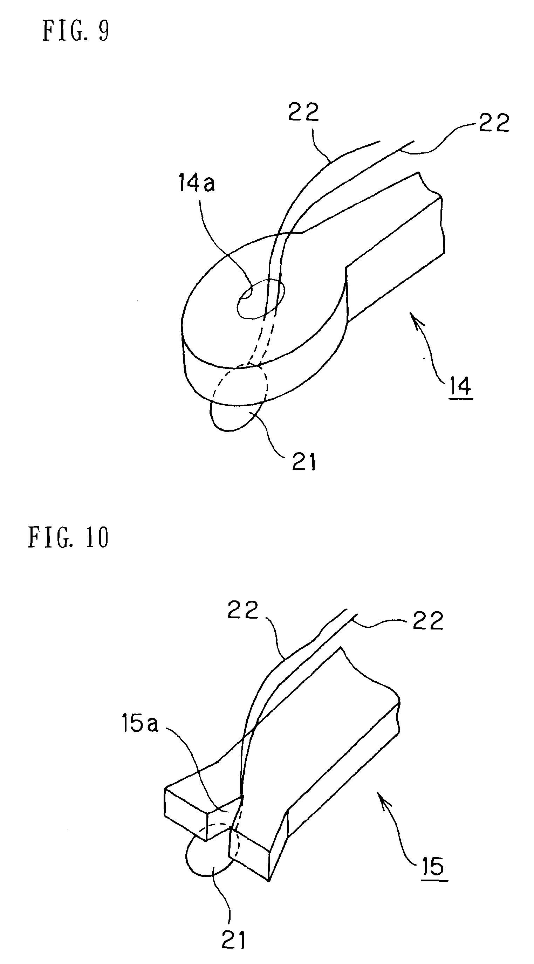

FIG. 9 shows an Example 2 according to the present invention. A modification of the lead wire holding portion (extending portion) will be explained in the present example. As other basic components and the operations are the same as those of the Example 1, the explanation about same component part will be eliminated.

FIG. 9 is a perspective view of a lead wire holding portion (extending portion) according to an Example 2 of the present invention. In the present example, only a holding portion (extending portion) has a different configuration from that of the Example 1 . A through hole 14a is provided at the tip of a protruding portion which protrudes in the longitudinal direction of a casing in an extending portion 14 according to the present example. The through hole 14a is set to have a dimension in which lead wire 22 can pass through the hole, and a temperature sensor 21 can not pass therethrough. Based on a configuration in which the lead wire 22 passes through the through hole 14a, the lead wire 22 can be held, in the same manner of that of the Example 1, in a state in which the temperature sensor 21 is pressed against the inner wall surface of a cap. Here, different from the case of the Example 1, the present example has a configuration in which an electronic substrate is required to be fixed in the inside of the casing after passing the lead wire 22 through the hole 14a, and connecting the end portion of the lead wire to an electronic substrate beforehand.

### (Example 3)

FIG. 10 shows an Example 3 according to the present invention. Amodification of a lead wire holding portion (extending portion) will be explained in the present example. As other basic components and the operations are the same as those of the Example 1, the explanation about same component part will be eliminated.

FIG. 10 is a perspective view of the leadwireholding portion (extending portion) according to the Example 3 of the present invention. In the present example, only a holding portion (extending portion) has a different configuration from that of the Example 1. In the extending portion 15 according to the present example, the tip of the protruding portion which protrudes in the longitudinal direction of the casing is shaped in the form of the Y letter. Thereby, a V groove portion 15a with a V-character shape is provided at the tip of the protruding portion. Furthermore, the lead wire 22 is configured to be inserted into the V groove portion 15a in the present example. Thereby, in the same manner as the case of the Example 1, the lead wire 22 can be held in a state in which a temperature sensor 21 is pressed against the inner wall surface of the cap.

### (Example 4)

FIG. 11A and FIG. 11B show an Example 4 according to the present invention. In the present example, a temperature sensor is configured to be supported by a lead wire holding portion (extending portion) and the inner wall surface of a cap. As other basic components and the operations are the same as those of the Example 1, the explanation about same component part will be eliminated.

FIG. 11A and FIG. 11B are a schematic cross sectional view showing a state in which a temperature sensor is fixed. Here, FIG. 11A shows a case according to the Example 1, and FIG. 11B shows a case according to the present example.

In the case of the Example 1, a temperature sensor 21 is provided at a position at which the temperature sensor 21 does not come in contact with an extending portion 13 of a lead wire holding portion as shown in FIG. 11A. In this case, the temperature sensor 21 is insufficiently fixed in some cases because the temperature sensor 21 is pressed against the inner wall surface of the cap 30 only by the elastic force of lead wire 22 and an extending portion 13 as described above. In this case, a small amount of adhesive is required to be applied on a contact portion X1 between the temperature sensor 21 and the inner wall surface of the cap 30.

On the other hand, the temperature sensor 21 is configured to be supported by the extending portion 16 as the lead wire holding portion and the inner wall surface of the cap 30 as shown in FIG. 11B in the present example. Thereby, the temperature sensor 21 can be surely fixed to the inner wall surface of the cap 30 even when an adhesive is not applied on a contact portion X2 between the temperature sensor 21 and the inner wall surface of the cap 30.

However, heat is deprived from the temperature sensor 21 to the extending portion 16 through the contact portion X2 in the present example because the sensor 21 is in contact with the extending portion 16. Then, it is desirable to inhibit heat conduction by reducing a contact area as much as possible, wherein the contact area is reduced by using line contact or point contact at the contact portion X2, for example, by rounding the temperature sensor 21.

### (Others)

In the above-explained Examples 1 to 4, there have been explained a configuration in which a temperature sensor is positioned by a configuration in which a lead wire holding portion holding lead wire is provided at the tip of a casing, and the lead wire is held by the lead wire holding portion. However, the temperature sensor can be also positioned not only by the configuration, but also by adopting a configuration in which the temperature sensor itself is held at the tip of the casing without, or with holding the lead wire at the tip of the casing at the same time. Thereby, the temperature sensor can be positioned in a similar manner as those of the examples in a state in which the temperature sensor is pressed against the inner wall surface of the cap. Specifically, the temperature sensor is fixed by providing a structure in which the temperature sensor is fixed at the tip of the casing with an adhesive and the like, or the temperature sensor is fit into the tip of the casing. Here, in addition to the configurations described in the Examples 2 to 4, there can be provided another configuration in which the temperature sensor can be fixed with an adhesive and the like in an extending portion in the examples.

## Claims

1. An electronic thermometer, comprising:
an internally hollow casing with an opening portion at the tip;
a temperature sensor connected by lead wire drawn out from the inside of said casing to the outside of said casing through said opening portion; and
a cap closing said opening portion, wherein
a positioning unit positioning said temperature sensor is provided at the tip of said casing.

2. An electronic thermometer according to claim 1, wherein
said positioning unit is a lead wire holding portion which holds said lead wire in a state in which said temperature sensor is pressed against the inner wall surface of said cap.

3. An electronic thermometer according to claim 2, wherein
said temperature sensor is provided at a position at which said sensor does not come in contact with said lead wire holding portion, and
said temperature sensor is pressed against the inner wall surface of said cap by at least any one of the elastic force of said lead wire holding portion and that of said lead wire.

4. An electronic thermometer according to claim 3, wherein
said temperature sensor is bonded to the inner wall surface of said cap by adhesive.

5. An electronic thermometer according to claim 2, wherein
said temperature sensor is supported by said lead wire holding portion and the inner wall surface of said cap.

6. An electronic thermometer according to any one of claims 2 to 5, wherein
said lead wire holding portion is configured to include an extending portion in which apart of the opening end edge of said opening portion is extended, and
a space through which said lead wire passes is provided in said extending portion.

7. An electronic thermometer according to claim 6, wherein
said extending portion includes:
a protruding portion protruding in the longitudinal direction of said casing; and
a bending portion bending from the tip of said protruding portion, wherein
said lead wire passes through a space between the opening end edge of said opening portion and said bending portion.

8. An electronic thermometer according to claim 7, wherein
a groove preventing position deviation of said lead wire is formed in said bending portion.

9. An electronic thermometer according to claim 8, wherein
the bottom of said groove is configured by an inclined surface which is inclined in the direction approaching the inner wall surface of said cap as approaching the tip of said protruding portion.

10. An electronic thermometer according to claim 6, wherein
said extending portion includes:
a protruding portion protruding in the longitudinal direction of said casing; and
a through hole which is formed around the vicinity of the tip of said protruding portion, and has a size passing said lead wire, and not passing said temperature sensor, wherein
said lead wire passes through said through hole.

11. An electronic thermometer according to claim 6, wherein
said extending portion includes:
a protruding portion protruding in the longitudinal direction of said casing; and
a V groove portion formed at the tip of said protruding portion, wherein
said lead wire is inserted into said V groove portion.

12. An electronic thermometer according to claim 1, wherein
said positioning unit is a temperature sensor holding portion holding said temperature sensor itself at the tip of said casing.

13. An electronic thermometer according to claim 12, wherein
said temperature sensor is supported by said temperature sensor holding portion and the inner wall surface of a cap.

14. An electronic thermometer according to claim 12 or 13, wherein
said temperature sensor is fixed to said temperature sensor holding portion by bonding.
